# EUROPEAN PATENT SPECIFICATION

(11) **EP 1 426 577 B1**
(45) Date of publication and mention of the grant of the patent: **18.11.2009**
(21) Application number: 03104469.6
(22) Date of filing: 01.12.2003
(51) Int. Cl.: F02B 29/04, B62D 35/00, B60K 11/04, B60K 13/02, B60K 11/08, F02M 35/10

(54) **A commercial vehicle**
Nutzfahrzeug
Véhicule utilitaire

(30) Priority: 03.12.2002 IT TO20021052
(43) Date of publication of application: 09.06.2004
(73) Proprietor: IVECO S.p.A., 10156 Torino (IT)
(72) Inventor: Pippione, Eugenio, 10141 Torino (IT); Scavarda, Gianfranco, 10080 Lusiglie' (IT)
(74) Representative: Gervasi, Gemma

(56) References cited:
- EP-A- 0 092 139
- EP-A- 0 191 012
- EP-A- 1 048 832
- DE-A- 2 747 785
- DE-A- 3 110 447
- DE-A- 3 916 692
- DE-A1- 19 923 693
- DE-A1- 19 938 428
- US-A- 4 345 641

## Description

The present invention relates to a commercial vehicle.

It is known that commercial vehicles comprise a driver's cab, an engine compartment provided below the cab, an internal-combustion engine of supercharged type, and various heat-exchange devices associated with the internal-combustion engine. These devices comprise, in particular, a radiator for cooling the coolant and an air/air exchanger, generally designated "intercooler" or "aftercooler", for cooling the precompressed comburent air. Each of said exchangers is associated with one or more fans which can be actuated under given operating conditions of the commercial vehicle and/or under given ambient conditions in which the natural ventilation is not sufficient to control the temperature of the working fluid.

Commercial vehicles have to reconcile requirements which are often contradictory, such as the provision of a comfortable and spacious cab, preferably with a flat floor disposed at the minimum distance possible from the ground, and the installation in the engine compartment of increasingly larger and more powerful power units, together with the associated ancillary devices such as, for example, the heat exchangers.

With regard to heat exchangers specifically, if higher thermal outputs are involved a greater space requirement would be needed, a necessity which is clearly inconsistent with that of improving the spaciousness of the cab while maintaining the overall dimensions of the vehicle substantially constant.

Another problem associated with motor vehicles in general and commercial vehicles in particular, is that of reducing consumption and emissions as much as possible; in particular, it is necessary to prevent significant proportions of the power generated by the engine from being dissipated by ancillary functions, for example the drive for the fans associated with the heat exchangers, to the detriment of the useful power intended for traction purposes.

EP 1 048 832 discloses a supercharged internal combustion engine for commercial vehicle, provided with an aftercooler and a radiator for the engine cooling fluid disposed behind the intercooler. Both devices are placed in the engine compartment below the floor of the vehicle and ventilation is provided also to the intake duct between the compressor and the aftercooler.

Both DE 27 47 785 and DE 39 16 692 describe commercial vehicles where a radiator is placed in a compartment above a flat roof of the cab, together with ventilation means. No aftercooler is foreseen according to those documents, all disclosing a vehicle cab with an entirely flat roof.

It is the object of the invention to devise, a commercial vehicle which successfully reconciles the above-mentioned requirement and at the same time makes it possible to optimise the management of the power generated by the engine.

According tao the present invention, a commercial vehicle is devised as claimed in claim 1.

Further preferred embodiments of the vehicle of the invention and characterized in the remaining claims.

The present invention will now be described with reference to the accompanying drawings which illustrate a non-restrictive example of embodiment thereof, wherein:
- Figure 1 is a schematic view in side elevation, with parts having been omitted for clarity, of a commercial vehicle designed in accordance with the present invention;
- Figure 2 is a view in perspective, with parts having been omitted for clarity, of a detail of the commercial vehicle in Figure 1, and
- Figure 3 is a view in perspective of a component of the commercial vehicle in Figure 1.

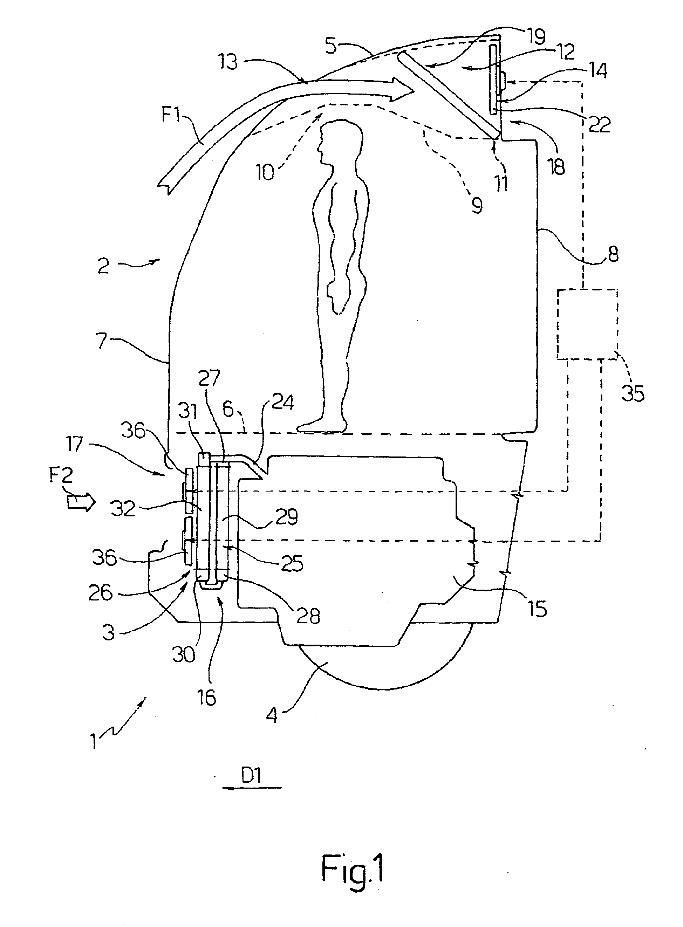

With reference to Figure 1, the reference numeral 1 generally denotes a commercial vehicle for heavy haulage. The vehicle 1 comprises a driver's cab 2, an engine compartment 3, front wheels 4, only one of which is shown in Figure 1, and a deflector 5 for the air flow created by the forward motion of the vehicle 1. The cab 2 has a floor 6, a front wall 7 which is generally formed by a windscreen and by a front panel, a rear wall 8 and a roof 9 which extends between the wall 7 and the wall 8. The roof 9 has a convexly shaped front portion 10, with its convexity turned upwards and disposed in the vicinity of the front wall 7 and a substantially flat rear portion 11 disposed in alignment with the rear wall 8. The portion 10 of the roof 9 makes it possible to enlarge in a vertical direction the space available in the front part of the cab 2.

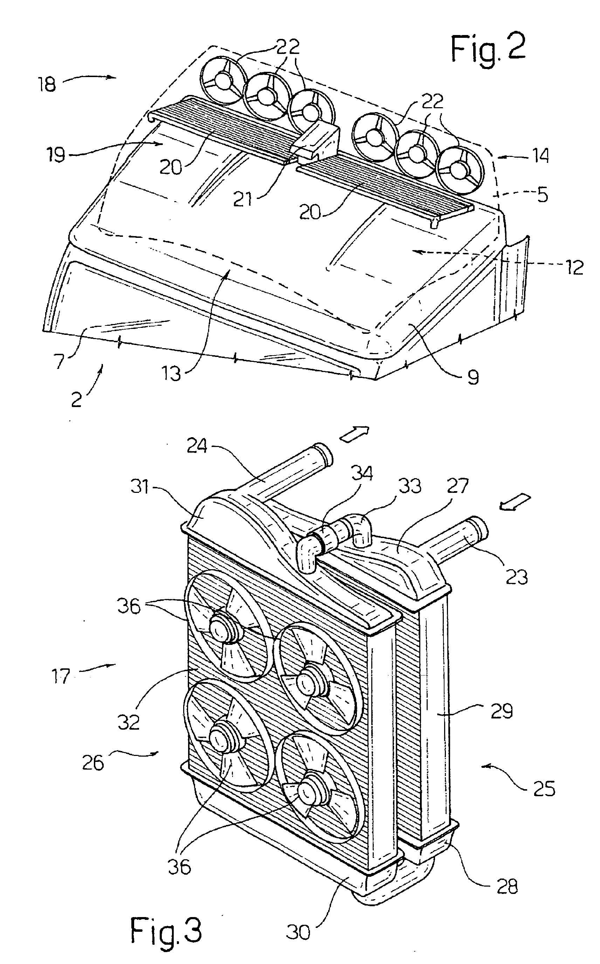

The deflector 5 is disposed above the roof 9 and forms with the roof 9 a compartment 12 connected to the exterior through a front air intake 13 and a rear opening 14, as is illustrated more clearly in Figure 2.

With reference to Figure 1, the engine compartment 3 is disposed below the floor 6 and accommodates an internal-combustion engine of supercharging type and an air/air heat exchanger 16, generally designated "after cooler", which is disposed in front of the engine 15. The engine compartment 3 has a front opening which defines an air intake 17 in front of the air/air heat exchanger 16.

The engine 15 is connected to a cooling assembly 18 for cooling the coolant of the engine 15. The assembly 18 is disposed in the compartment 10 above the portion 11 of the roof 9 and it comprises a radiator 19 which is formed by two radiating panels 20, between which is interposed an expansion vessel 21 of the coolant circuit (not shown in the accompanying drawings) and a series of electric fans 22 disposed in alignment with the opening 14. The panels 20 are arranged sloped with one end set back and supported on the portion 11 and with one end moved forward arranged directly below the deflector 5.

With reference to Figure 3, the air/air heat exchanger 16 is connected to an inlet duct 23 and an outlet duct 24 and is formed by two units 25 and 26 connected in series. The unit 25 has an inlet manifold 27 connected to the inlet duct 23 and an outlet manifold 28 and an exchange body 29 disposed between the inlet manifold 27 and the outlet manifold 28. The unit 26 has an inlet manifold 30, an outlet manifold 31 connected to the outlet duct 24 and an exchange body 32 disposed between the inlet manifold 30 and the outlet manifold 31. Each of the units 25 and 26 is in the form of a substantially rectangular panel and they are placed one in front of the other in such a way that the outlet manifold 31 of the unit 26 is disposed in the vicinity of the inlet manifold 27 of the unit 25.

The inlet manifold 27 is connected to the outlet manifold 31 by means of a bypass duct 33, along which is disposed a solenoid valve 34 which is actuated by a control unit 35.

The two units 25 and 26 are situated opposite one another and are disposed between the engine 15 and the air intake 17. A series of electric fans 36 is disposed in front of the unit 26 so as to convey a flow of cooling air under certain operating conditions of the vehicle 1.

In operation, when the vehicle 1 is moving forward in the direction D1 in Figure 1, flows F1 and F2 flow through the air intakes 13 and 17 respectively. The flow F1, which "gathers" by dynamic effect a major part of the air flow impinging on the windscreen, describes a curvilinear path guided at the bottom by the shape of the portion 10. For this purpose, it should be specified that aerodynamic studies carried out by the Applicant have shown that the speed range of the flow F1 would be substantially identical even if the portion 10 did not exist, as a result of a stall in the lower zone of the flow which would arise by dynamic effect following entry into the air intake 13. In other words, the portion 10 makes it possible to increase the interior space of the driver's cab without interfering with the dynamic behaviour of the flow F1 and the thermal exchange of the radiator 19.

The flow F1 impinges on the radiator 19 and effects the cooling of the coolant in the engine 15, whereas the flow F2 impinges on the exchanger 16 so as to cool the precompressed comburent air.

When the speed of the vehicle 1 is not sufficient to create consistent air flows F1 and F2 able to carry out the required cooling, the control unit 35 actuates the electric fans 22 and 36.

The described arrangement of the radiator 19 and of the exchanger 16 makes it possible to optimise the space in the driver's cab 2 and in the engine compartment 3, while increasing the exchange surfaces. Therefore, there is a reduction in the need for the fans to operate and thus in the power absorbed by them, which is advantageous in respect of fuel consumption and the power available at the wheels. With regard to conventional solutions with a fan disposed in front of the engine and actuated by the engine itself, which absorbs about 20 kW, the power absorbed by the electric fans 22 associated with the radiator 19 may be reduced to about a fifth. There is also a substantial reduction in noise compared to this conventional solution.

The use of separate electric fans for the radiator 19 and the exchanger 16 makes possible optimum control thereof, resulting in a further reduction in the power absorbed by the fans themselves.

The sloped panels 20 of the radiator 19, which are disposed in the rear part of the driver's cab, further make it possible to gain space in the front part of the driver's cab 2 owing to the convex shape of the portion 10.

Finally, by providing the air/air exchanger 16 in two exchange units 25 and 26 it is possible to reduce the vertical dimensions of the exchanger 16 and to lower the floor 6 of the driver's cab 2, also owing to the absence of the radiator 19 in that zone.

Finally, it is evident that the vehicle described can be subject to modifications and variants which do not depart from the scope of protection of the claims.

In particular, the arrangement of the radiator 19 can be changed, the panels of which can be arranged in a substantially vertical position rather than sloped, if they are sufficiently compact in this direction.

## Claims

1. A commercial vehicle comprising a driver's cab (2) provided with a floor (6) and a roof (9); a deflector (5) disposed above the roof (9) of the driver's cab (2) and defining therewith a first compartment (12) communicating with a first air intake (13) : a second compartment (3) disposed below the floor (6) of the cab (2) and having a second air intake (17); a supercharged internal-combustion engine (15) accommodated in the second compartment (3); a cooling assembly (18) disposed in said first compartment (12) for cooling the coolant of the engine (15) by way of the air conveyed through said first air intake (13); an air/air heat exchanger (16) accomodated into said second compartment (3) for cooling the intake air of the engine (15),
the commercial vehicle being **characterised in that**
said cab (2) comprises a front wall (7) and a rear wall (8), said roof (9) having a front potion (10) of convex shape, having its convexity facing upwards and disposed in the vicinity of the front wall (7) of said cab (2),
said roof (9) having further a flat rear portion (11) disposed in the vicinity of the rear wall (8) of the cab (2), said cooling assembly (18) being disposed above said flat portion (11) of the roof (9),
said convex front portion (10) of said roof (9) making it possible, in combination with said flat rear portion (11) supporting said cooling assembly (18), to enlarge in a vertical direction the space available in the front part of said cab (2).

2. A commercial vehicle according to claim 1, **characterised in that** said cooling assembly (18) is disposed in alignment with the rear part of the cab (2) and above the cab (2).

3. A commercial vehicle according to claim 1 or 2, **characterised in that** said cooling assembly (18) comprises a radiator (19) provided with flat panels (20) sloped with respect to the direction (D1) of forward motion.

4. A commercial vehicle according to claim 2, **characterised in that** each panel (20) has an upper end disposed upstream of the lower end with respect to the direction (D1) of forward motion.

5. A commercial vehicle according to any one of the preceding claims, **characterised in that** said cooling assembly (18) comprises at least one second electric fan (22) disposed between the roof (9) of the cab (2) and the deflector (5) and downstream of the radiator (18) with respect to the direction (D1) of forward motion of the vehicle.

6. A. commercial vehicle according to claim 5, **characterised by** comprising a series of second electric fans (22) disposed between driver's cab (2) and the deflector (5) and downstream of the radiator (19) with respect to said forward motion direction (D1).

7. A vehicle according to any one of the preceding claims, **characterised by** comprising a series of first electric fans (36) facing the air/air exchanger (16).

8. A commercial vehicle according to any one of the preceding claims, **characterised in that** said air/air exchanger (16) comprises an air inlet duct (23), an air outlet duct (24), a first exchange unit (25) connected to the inlet duct (23) and a second exchange unit (26) connected to the outlet duct (24), said first and second exchange units (25,26) being, disposed facing one another and facing said second air intake (17).

9. A vehicle according to claim 8, **characterised in that** the first exchange unit (25) comprises a first inlet manifold (27) and a first outlet manifold (28), and the second exchange unit (26) comprises a second inlet manifold (30) and a second outlet manifold (31), the first outlet manifold (28) communicating with the second inlet manifold (30) so as to connect in series the first and second exchange units (25,26).

10. A commercial vehicle according to claim 9, **characterised in that** the first inlet manifold (27) can be selectively directly connected to the second outlet manifold (31) so as to bypass the first and second exchange units (25,26).

11. A commercial vehicle according to claim 10, **characterised in that** the first inlet manifold (27) is connected to the second outlet manifold (31) by means of a bypass duct (33) and a solenoid valve (34) disposed along said bypass duct (33).

## Patentansprüche

1. Kommerzielles Fahrzeug, umfassend eine Fahrerkabine (2), die mit einem Boden (6) und einem Dach (9) versehen ist; einen Windabweiser (5), der oberhalb des Dachs (9) der Fahrerkabine (2) angeordnet ist, und der damit eine erste Abteilung (12) definiert, die mit einem ersten Lufteinlass (13) verbunden ist; eine zweite Abteilung (3), die unterhalb des Bodens (6) der Kabine (2) angeordnet ist, und einen zweiten Lufteinlass (17) aufweist; einen aufgeladenen Verbrennungsmotor (15), der in der zweiten Abteilung (3) untergebracht ist; eine Kühlanordnung (18), die in der ersten Abteilung (12) angeordnet ist, um das Kühlmittel des Motors (15) durch die Luft zu kühlen, die durch den ersten Lufteinlass (13) gefördert wird; einen Luft/Luft Wärmetauscher (16) der in der zweiten Abteilung (3) untergebracht ist, zum Kühlen der Einlassluft des Motors (15),
wobei das kommerzielle Fahrzeug **dadurch gekennzeichnet ist, dass**
die Kabine (2) eine Vorderwand (7) und eine Rückwand (8) aufweist, wobei das Dach (9) einen Vorderabschnitt (10) von konvexer Form aufweist, dessen Konvexität nach oben gerichtet ist und der in der Umgebung der Vorderwand (7) der Kabine (2) angeordnet ist,
wobei das Dach (9) ferner einen flachen Rückabschnitt (11) aufweist, der in der Umgebung der Rückwand (8) der Kabine (2) angeordnet ist, wobei die Kühlanordnung (18) oberhalb des flachen Abschnitts (11) des Dachs (9) angeordnet ist,
wobei es der konvexe Vorderabschnitt (10) des Dachs (9) möglich macht, in Kombination mit dem flachen Rückabschnitt (11) die Kühlanordnung (18) zu halten, um den im Vorderteil der Kabine (2) verfügbaren Raum in einer vertikalen Richtung zu vergrößern.

2. Kommerzielles Fahrzeug nach Anspruch 1, **dadurch gekennzeichnet, dass** die Kühlanordnung (18) fluchtend mit dem Rückteil der Kabine (2) und oberhalb der Kabine (2) angeordnet ist.

3. Kommerzielles Fahrzeug nach Anspruch 1 oder 2, **dadurch gekennzeichnet, dass** die Kühlanordnung (18) einen Radiator (19) aufweist, der mit flachen Elementen (20) versehen ist, die in Bezug auf die Richtung (D1) einer Vorwärtsbewegung geneigt sind.

4. Kommerzielles Fahrzeug nach Anspruch 2, **dadurch gekennzeichnet, dass** jedes Element (20) ein oberes Ende aufweist, das stromaufwärts des unteren Endes in Bezug auf die Richtung (D1) einer Vorwärtsbewegung angeordnet ist.

5. Kommerzielles Fahrzeug nach einem der vorgehenden Ansprüche, **dadurch gekennzeichnet, dass** die Kühlanordnung (18) zumindest einen zweiten elektrischen Lüfter (22) aufweist, der zwischen dem Dach (9) der Kabine (2) und dem Windabweiser (5) und stromabwärts des Radiators (18) in Bezug auf die Richtung (D1) der Vorwärtsbewegung des Fahrzeugs angeordnet ist.

6. Kommerzielles Fahrzeug nach Anspruch 5, **dadurch gekennzeichnet, dass** es eine Reihe von zweiten elektrischen Lüftern (22) umfasst, die zwischen der Fahrerkabine (2) und dem Windabweiser (5) und stromabwärts des Radiators (19) in Bezug auf die Vorwärtsbewegungsrichtung (D1) angeordnet sind.

7. Fahrzeug nach einem der vorgehenden Ansprüche, **dadurch gekennzeichnet, dass** es eine Reihe von ersten elektrischen Lüftern (36) aufweist, die dem Luft/Luft Tauscher (16) zugewandt sind.

8. Kommerzielles Fahrzeug nach einem der vorgehenden Ansprüche, **dadurch gekennzeichnet, dass** der Luft/Luft Tauscher (16) eine Lufteinlassführung (23), eine Luftauslassführung (24), eine erste Tauscheinheit (25), die mit der Einlassführung (23) verbunden ist, und eine zweite Tauscheinheit (26), die mit der Auslassführung (24) verbunden ist, aufweist, wobei die erste und zweite Tauscheinheit (25, 26) einander zugewandt und dem zweiten Lufteinlass (17) zugewandt angeordnet sind.

9. Fahrzeug nach Anspruch 8, **dadurch gekennzeichnet, dass** die erste Tauscheinheit (25) einen ersten Einlasskrümmer (27) und einen ersten Auslasskrümmer (28) aufweist und die zweite Tauscheinheit (26) einen zweiten Einlasskrümmer (30) und einen zweiten Auslasskrümmer (31) aufweist, wobei der erste Auslasskrümmer (28) mit dem zweiten Einlasskrümmer (30) verbunden ist, um die erste und zweite Austauscheinheit (25, 26) in Reihe zu verbinden.

10. Kommerzielles Fahrzeug nach Anspruch 9, **dadurch gekennzeichnet, dass** der erste Einlasskrümmer (27) wahlweise direkt mit dem zweiten Auslasskrümmer (31) verbunden sein kann, um die erste und zweite Tauscheinheit (25, 26) zu umgehen.

11. Kommerzielles Fahrzeug nach Anspruch 10, **dadurch gekennzeichnet, dass** der erste Einlasskrümmer (27) mit dem zweiten Auslasskrümmer (31) durch eine Bypassführung (33) verbunden ist und ein Solenoidventil (34) entlang der Bypassführung (33) angeordnet ist.

## Revendications

1. Véhicule utilitaire comportant une cabine de conduite (2) munie d'un plancher (6) et d'un toit (9), un déflecteur (5) disposé au-dessus du toit (9) de la cabine du conduite (2) et définissant avec celui-ci un premier compartiment (12) en communication avec une première prise d'air (13), un second compartiment (3) disposé sous le plancher (6) de la cabine (2) et ayant une seconde prise d'air (17), un moteur à combustion interne suralimenté (15) logé dans le second compartiment (3), un dispositif de refroidissement (18) disposé dans ledit premier compartiment (12) pour refroidir le fluide de refroidissement du moteur (15) par l'intermédiaire de l'air acheminé à travers ladite première prise d'air (13), un échangeur de chaleur air/air (16) logé dans ledit second compartiment (3) pour refroidir l'air d'admission du moteur (15),
le véhicule utilitaire étant **caractérisé en ce que**
ladite cabine (2) comporte une paroi avant (7) et une paroi arrière (8), ledit toit (9) ayant une partie avant (10) de forme convexe, ayant sa convexité dirigée vers le haut et disposée au voisinage de la paroi avant (7) de ladite cabine (2),
ledit toit (9) ayant en outre une partie arrière plate (11) disposée au voisinage de la paroi arrière (8) de la cabine (2), ledit dispositif de refroidissement (18) étant disposé au-dessus de ladite partie plate (11) du toit (9),
ladite partie avant convexe (10) dudit toit (9) permettant, en combinaison avec ladite partie arrière plate (11) supportant ledit dispositif de refroidissement (18), d'agrandir dans une direction verticale l'espace disponible dans la partie avant de ladite cabine (2).

2. Véhicule utilitaire selon la revendication 1, **caractérisé en ce que** ledit dispositif de refroidissement (18) est disposé en alignement avec la partie arrière de la cabine (2) et au-dessus de la cabine (2).

3. Véhicule utilitaire selon la revendication 1 ou 2, **caractérisé en ce que** ledit dispositif de refroidissement (18) comporte un radiateur (19) muni de panneaux plats (20) inclinés par rapport à la direction (D1) de marche avant.

4. Véhicule utilitaire selon la revendication 2, **caractérisé en ce que** chaque panneau (20) a une extrémité supérieure disposée en amont de l'extrémité inférieure par rapport à la direction (D1) de marche avant.

5. Véhicule utilitaire selon l'une quelconque des revendications précédentes, **caractérisé en ce que** ledit dispositif de refroidissement (18) comporte au moins un second ventilateur électrique (22) disposé entre le toit (9) de la cabine (2) et le déflecteur (5) et en aval du radiateur (18) par rapport à la direction (D1) de marche avant du véhicule.

6. Véhicule utilitaire selon la revendication 5, **caractérisé en ce qu'**il comporte une série de seconds ventilateurs électriques (22) disposés entre la cabine de conduite (2) et le déflecteur (5) et en aval du radiateur (19) par rapport à ladite direction (D1) de marche avant.

7. Véhicule selon l'une quelconque des revendications précédentes, **caractérisé en ce qu'**il comporte une série de premiers ventilateurs électriques (36) dirigés vers l'échangeur air/air (16).

8. Véhicule utilitaire selon l'une quelconque des revendications précédentes, **caractérisé en ce que** ledit échangeur air/air (16) comporte un conduit d'entrée d'air (23), un conduit de sortie d'air (24), une première unité d'échange (25) reliée au conduit d'entrée (23) et une seconde unité d'échange (26) reliée au conduit de sortie (24), lesdites première et seconde unités d'échange (25, 26) étant disposées l'une en face de l'autre et dirigées vers ladite seconde prise d'air (17).

9. Véhicule utilitaire selon la revendication 8, **caractérisé en ce que** la première unité d'échange (25) comporte une première tubulure d'entrée (27) et une première tubulure de sortie (28), et la seconde unité d'échange (26) comporte une seconde tubulure d'entrée (30) et une seconde tubulure de sortie (31), la première tubulure de sortie (28) communiquant avec la seconde tubulure d'entrée (30) de manière à raccorder les première et seconde unités d'échange (25, 26) en série.

10. Véhicule utilitaire selon la revendication 9, **caractérisé en ce que** la première tubulure d'entrée (27) peut être directement reliée de manière sélective à la seconde tubulure de sortie (31) de manière à contourner les première et seconde unités d'échange (25, 26).

11. Véhicule utilitaire selon la revendication 10, **caractérisé en ce que** ladite première tubulure d'entrée (27) est raccordée à la seconde tubulure de sortie (31) au moyen d'un conduit de dérivation (33) et d'une électrovanne (34) disposée le long dudit conduit de dérivation (33).
